# EUROPÄISCHE PATENTANMELDUNG

(11) **EP 0 712 239 A2**
(43) Veröffentlichungstag der Anmeldung: **15.05.1996**
(21) Anmeldenummer: 95117305.3
(22) Anmeldetag: 03.11.1995
(51) Int. Cl.: H04N 3/185

(54) **Schaltung zum Erzeugen einer Gitterspannung für die Bildröhre in einem Fernsehempfänger**

(30) Priorität: 12.11.1994 DE 4440506
(71) Anmelder: DEUTSCHE THOMSON-BRANDT GMBH, D-78048 Villingen-Schwenningen (DE)
(72) Erfinder: Goseberg, Walter, D-30457 Hannover (DE)

(57) **Zusammenfassung**

Neuartige Bildröhren mit einer sogenannten Vektor-Gun benötigen nur eine Fokussierspannung ohne Modulation sowie in üblicher Weise eine Vorspannung für das Gitter 2. Fokussierspannung und Gitterspannung werden von einem Spannungsteiler abgenommen. Durch Leckströme innerhalb der Bildröhre, die einen Strom in den genannten Spannungsteiler hinein erzeugen, kann es zu unerwünschten Änderungen der Gitterspannung kommen, die zu einer Farbverfälschung oder einem Farbumschlag führen können.

Aufgabe ist es, eine einfache Schaltung zur Verringerung derartiger Änderungen der Gitterspannung durch Leckströme in der Bildröhre zu schaffen.

Erfindungsgemäß ist eine Impulsspannungsquelle (P) über eine Gleichrichterschaltung (D1, C1) an einen Abgriff (A) des Potentiometers (5) angeschlossen, von dessen Schleifer (S) die Spannung (UG2) für das Gitter 2 der Bildröhre (1) abgenommen wird.

Insbesondere für einen Fernsehempfänger mit einer sogenannten Vektor-Gun-Bildröhre

## Beschreibung

Die Erfindung geht aus von einer Schaltung gemäß dem Oberbegriff des Anspruchs 1. Neuartige Bildröhren mit einer sogenannten Vektor-Gun haben eine verbesserte Bildschärfe und benötigen nicht mehr eine modulierte Fokussierspannung. Die Fokussier-Gleichspannung und die Vorspannung für das Gitter 2 der Bildröhre werden von getrennten Potentiometern innerhalb eines Spannungsteilers abgenommen, der an eine vom Hochspannungstransformator abgeleitete Fokussierspannung von etwa 12 kV angeschlossen ist.

Bei derartigen Bildröhren, die eine erhöhte Spannung von etwa 0,6 kV - 1,4 kV für das Gitter 2 der Bildröhre benötigen, können in der Bildröhre undefinierte Leckströme auftreten. Derartige Leckströme erzeugen einen Strom in den Schleifer des Potentiometers für die Gitterspannung hinein. Dieser Strom kann die von dem Schleifer abgenommene Spannung für das Gitter 2 derart verfälschen, daß Farbverfälschungen oder sogar ein Farbumschlag durch Außertrittfallen von Regelschaltungen auftreten. Es ist auch nicht möglich, eine derartige Änderung der Gitterspannung bei der Fertigung einzueichen, da sich derartige Leckströme über die Lebensdauer und insbesondere über die ersten Tage, Wochen oder gar Monate beträchtlich ändern können.

Es ist bekannt, die Primärwicklung des Zeilentransformators über das mit dem Schalttransistor der Zeilenendstufe verbundene Ende hinaus um eine Zusatzwicklung zu verlängern und diese über eine Gleichrichterschaltung an ein Ende des Potentiometers für die Gitterspannung anzuschließen. Die Gleichrichterschaltung bildet dabei eine Spannungsquelle, die niederohmig ist gegenüber dem Potentiometer. Dadurch wird der Innenwiderstand des die Gitterspannung liefernden Schleifers verringert, so daß auch Änderungen der vom Schleifer abgenommenen Gitterspannung durch in den Schleifer hineinfließende Leckströme reduziert werden. Die Zusatzwicklung am Zeilentransformator ist notwendig, weil eine durch Gleichrichtung der Impulsspannung am Schalttransistor gewonnene Gleichspannung nicht den notwendigen Wert von etwa 1400 V für die Einspeisung in ein Ende des Potentiometers für die Gitterspannung hat. Diese Lösung erfordert somit eine zusätzliche Wicklung am Zeilentransformator, einen zusätzlichen Anschlußstift, einen sogenannten Pin, am Trafo, und erzeugt zusätzliche Isolationsprobleme.

Der Erfindung liegt die Aufgabe zugrunde, eine derartige Schaltung zur Verringerung des Einflusses von Leckströmen auf den Wert der Gitterspannung zu vereinfachen. Diese Aufgabe wird durch die im Anspruch 1 angegebene Erfindung gelöst. Vorteilhafte Weiterbildungen der Erfindung sind in den Unteransprüchen angegeben.

Gemäß der Erfindung ist somit eine Impulsspannungsquelle über eine Gleichrichterschaltung nicht an ein Ende, sondern an einen Abgriff des Potentiometers für die Gitterspannung angeschlossen. Die Erfindung beruht dabei auf folgender Überlegung.

Wenn die Gleichrichterschaltung nicht an das heiße Ende des Potentiometers für die Gitterspannung angeschlossen wird, sondern an einen Angriff, so kann die von der Gleichrichterschaltung erzeugte Gleichspannung einen geringeren Wert haben, weil die Gleichspannung an dem Angriff des Potentiometers geringer ist als die Gleichspannung an seinem heißen Ende. Es kann dann ein Angriff an dem Potentiometer gewählt werden, dessen Gleichspannung etwa gleich derjenigen Gleichspannung ist, die sich durch Gleichrichtung der Impulsspannung an dem heißen Ende der Primärwicklung des Zeilentrafos, d.h. an dem Kollektor des Schalttransistors, ergibt. Die bisher benötigte zusätzliche Wicklung am Zeilentransformator wird dann nicht mehr benötigt. Der Eingang der Gleichrichterschaltung kann dann direkt an den Verbindungspunkt zwischen der Primärwicklung des Zeilentrafos und dem Schalttransistor angeschlossen werden. Damit entfällt auch ein zusätzlicher Anschlußstift oder Pin am Zeilentrafo. Durch die geringere von dem Gleichrichter erzeugte Spannung werden auch die Bauteile der Gleichrichterschaltung und das zum Zuführen der Spannung zu dem Potentiometer dienende Kabel vereinfacht.

Durch die erfindungsgemäße Lösung kann der Innenwiderstand des Potentiometers, von Schleifer ausgemessen, für alle Einstellungen der Gitterspannung etwa von 15 MOhm auf 3 - 4 MOhm verringert werden. Entsprechend werden die späteren Änderungen in der Gitterspannung durch Leckströme um wenigstens den Faktor 4 verringert. Der erfindungsgemäße Anschluß an den Angriff des Potentiometers erfordert indessen keinen Mehraufwand, da in der Regel das Potentiometer und die übrigen Widerstände des Spannungsteilers und auch die Leitung zu dem Angriff als gedruckte Schaltung ausgebildet sind.

Für die Wahl des Angriffes gibt es an sich zwei Kriterien. Einmal muß der Angriff an dem Potentiometer so gewählt werden, daß die an dem Angriff stehende Gleichspannung und die von der Gleichrichterschaltung gelieferte Gleichspannung etwa gleich sind, um Ausgleichsströme zu vermeiden. Andererseits ist es optimal, wenn der Angriff für die eingespeiste Gleichspannung und der Schleifer für die Gitterspannung etwa an derselben Stelle des Potentiometers liegen. Dann wird nämlich der Innenwiderstand des Schleifers für die Gitterspannung gleich dem niederohmigen Ausgangswiderstand der Gleichrichterschaltung. Es hat sich gezeigt, daß diese beiden Forderungen in der Praxis gleichzeitig in ausreichender Weise erfüllt werden können.

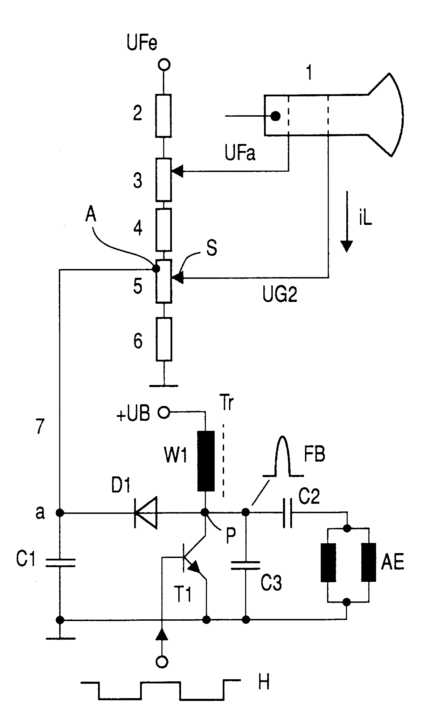

Die Erfindung wird im folgenden anhand der Zeichnung an einem Ausführungsbeispiel erläutert.

Die Figur zeigt für einen Fernsehempfänger die Bildröhre 1 und den Spannungsteiler mit dem Widerstand 2, dem Potentiometer 3, dem Widerstand 4, dem Potentiometer 5 und dem Widerstand 6. An den Spannungsteiler ist eine Fokussiereingangsspannung UFe angelegt, die von einem Angriff der Hochspannungswicklung des Zeilentrafos abgeleitet ist. Von dem Schleifer des Potentiometers 3 wird die Fokussierausgangsspannung UFa abgenommen und zur Fokussierung der Bildröhre 1 zugeführt. Von dem Schleifer S des Potentiometers 5 wird die Spannung UG2 für das Gitter 2 der Bildröhre 1 abgenommen, die mit dem Schleifer S auf Werte zwischen 0,6 und 1,4 kV einstellbar ist.

Im unteren Teil der Figur ist in vereinfachter Form die Zeilenendstufe des Fernsehempfängers dargestellt. Die Betriebsspannung +UB ist über die Primärwicklung W1 des Zeilentransformators Tr mit dem Kollektor des Schalttransistors T1 verbunden, der durch die zeilenfrequente Schaltspannung H gesteuert wird. Der Verbindungspunkt P zwischen der Primärwicklung W1 und dem Schalttransistor T1 ist über den Koppelkondensator C2 mit der Zeilenablenkeinheit AE verbunden und außerdem über den Rücklaufkondensator C3 geerdet.

An den Punkt P ist zusätzlich der Eingang der Gleichrichterschaltung mit der Diode D1 und dem Kondensator C1 angeschlossen, deren Ausgang a über die Leitung 7 mit dem Abgriff A des Potentiometers 5 verbunden ist. Die Gleichrichterschaltung D1, C1 hat am Punkt a einen Innenwiderstand von etwa 1 MOhm. Dieser gegenüber dem Spannungsteiler 2 - 6 niederohmige Innenwiderstand wird somit in den Abgriff A eingeprägt, so daß auch der Innenwiderstand des Schleifers S für die Gitterspannung UG2 entsprechend niederohmiger wird. Dadurch wird der Einfluß von Leckströmen iL, die von der Bildröhre 1 in den Schleifer S hineinfließen, auf den Wert der vom Schleifer S abgenommenen Gitterspannung UG2 beträchtlich verringert. Der Abgriff A ist so gewählt, daß die aufgrund der Spannung UFe sich am Abgriff A ergebende Gleichspannung und die durch die Gleichrichterschaltung D1, C1 am Punkt a erzeugte Gleichspannung etwa gleich groß sind. Dann werden unerwünschte Ausgleichsströme zwischen dem Potentiometer 5 und der angeschlossenen Gleichrichterschaltung D1, C1 weitestgehend vermieden. Derartige Ausgleichsströme würden in unerwünschter Weise den gewünschten Einstellbereich für die Gitterspannung UG einengen. Bei einem praktisch erprobten Ausführungsbeispiel hatten die in der Figur dargestellten Bauteile folgnde Werte:

| | |
|---|---|
| Widerstand 2: | 15 MOhm |
| Widerstand 3: | 40 MOhm |
| Widerstand 4: | 60 MOhm |
| Potentiometer 5: | 12 MOhm |
| Widerstand 6: | 3 MOhm |
| Einstellbereich für UG 2:0,6 - 1,4 kV | |
| Amplitude des Impulses P 1150 - 1350 V | |
| Wert von UFe: etwa 12 kV | |

## Patentansprüche

1. Schaltung zum Erzeugen einer Gitterspannung für die Bildröhre (1) in einem Fernsehempfänger, bei der das Gitter der Bildröhre an den Schleifer (S) eines Potentiometers (5) angeschlossen ist, das Bestandteil eines aus mehreren Widerständen (2 - 6) bestehenden und an die Fokussierspannung (UFe) angeschlossenen Spannungsteilers bildet, **dadurch gekennzeichnet**, daß eine Impulsspannungsquelle (P) über eine Gleichrichterschaltung (D1, C1) an einen Abgriff (A) des Potentiometers (5) angeschlossen ist.

2. Schaltung nach Anspruch 1, **dadurch gekennzeichnet**, daß die Impulsspanungsquelle durch die Primärwicklung (W1) des Zeilentrafos (Tr) der Zeilenendstufe gebildet ist.

3. Schaltung nach Anspruch 2, **dadurch gekennzeichnet**, daß der Eingang der Gleichrichterschaltung (D1, C1) an den Verbindungspunkt (P) zwischen der Primärwicklung (W1) und dem als zeilenfrequenter Schalter arbeitenden Schalttransistor (T1) angeschlossen ist.

4. Schaltung nach Anspruch 1, **dadurch gekennzeichnet**, daß der Abgriff (A) so gewählt ist, daß die von der Gleichrichterschaltung (D1, C1) gelieferte Gleichspannung und die an dem Abgriff (A) aufgrund der an den Spannungsteiler (1 - 6) angelegten Fokussier-Eingangsspannung (UFe) stehende Gleichspannung etwa gleich groß sind.

5. Schaltung nach Anspruch 1, **dadurch gekennzeichnet**, daß der Spannungsteiler (2 - 6) und die zu dem Abgriff (A) führende Leitung (7) vom Ausgang der Gleichrichterschaltung (D1, C1) in gedruckter Leitertechnik ausgebildet sind.
